# EUROPÄISCHE PATENTANMELDUNG

(11) **EP 3 473 404 A1**
(43) Veröffentlichungstag der Anmeldung: **24.04.2019**
(21) Anmeldenummer: 17196908.2
(22) Anmeldetag: 17.10.2017
(51) Int. Cl.: B29C 47/66, B29C 47/38, B29C 47/44, B29B 7/42

(54) **MISCH- UND KNETVORRICHTUNG**

(71) Anmelder: Buss AG, 4133 Pratteln (CH)
(72) Erfinder: Walter, Wolfgang, 73434 Aalen (DE); Schötzau, Martin, 4302 Augst (CH)
(74) Vertreter: Henkel, Breuer & Partner

(57) **Zusammenfassung**

Misch- und Knetmaschine (100), bei der sich eine Schneckenwelle (12) in einem Gehäuse (10) rotierend bewegt und translatorisch hin- und her bewegt, aufweisend Aufnahmen für Knetelemente (12), die ungleichmässig verteilt sind. Dadurch ist es möglich, die Aufnahmen mit variierender Anzahl von Knetelementen zu bestücken. Dadurch ist auch ein schnelles Umrüsten möglich. In einer Ausführungsform variiert die Anzahl der Knetelemente über die Erstreckungsrichtung der Misch- und Knetmaschine (100) hinweg.

## Beschreibung

Die Erfindung betrifft eine Misch- und Knetmaschine, aufweisend:
- ein Gehäuse, das aus mindestens zwei Gehäuseteilen zusammengesetzt ist, welche zum Öffnen des Gehäuses voneinander wegklappbar oder voneinander trennbar sind, und welches einen im Querschnitt kreisförmigen Innenraum bereitstellt,
- eine Schneckenwelle, die im Betrieb in dem Innenraum rotiert und sich gleichzeitig in einer axialen Richtung der Schneckenwelle translatorisch hin- und her bewegt,
- eine Mehrzahl von der Innenseite zumindest eines der Gehäuseteile nach innen ragenden Knetelementen (Knetbolzen oder Knetzähnen), die in zumindest zwei Reihen angeordnet sind, und wobei die Schneckenwelle Flügelelemente aufweist, die durch die Rotation und die translatorische Bewegung der Schneckenwelle ein zu mischendes und zu knetendes Material in einen Spalt zwischen dem jeweiligen Flügelelement und einem Knetelement hineinziehen, wobei durch eine hierbei entstehende Scherung eine Misch- und Knetwirkung erzielt wird.

Die Funktionsweise der Misch- und Knetmaschine beinhaltet typischerweise, dass zunächst eine Schmelze erzeugt wird, wobei die Temperatur je nach dem (anschliessend) zu extrudierenden Material zwischen 100° und 400° C beträgt. Diese Schmelze soll dann durch Mischen homogenisiert werden. Bei manchen Prozessen wird der Misch- und Knetmaschine ein Gemenge aus zumindest zwei Bestandteilen zugeführt (sog. "dryblend"), von dem die schmelzfähigen Bestandteile aufgeschmolzen werden und sodann alle Bestandteile homogenisiert werden. Bei anderen Prozessen wird zunächst aus einem Stoff eine Schmelze erzeugt, und danach werden weitere Stoffe in Transport- beziehungsweise Förderrichtung stromabwärts hinzugefügt, wonach die Bestandteile des so entstehenden Gemischs homogenisiert werden.

Eine solche (gattungsgemässe) Misch- und Knetmaschine ist aus der CH 278 575 A bekannt. Auch die CH 464 656 offenbart eine entsprechende Mischvorrichtung.

Misch- und Knetmaschinen der gattungsgemässen Art werden insbesondere zum Aufbereiten von plastischen und/oder pastösen Massen eingesetzt. Beispielsweise dienen sie dem Verarbeiten von zähplastischen Massen, dem Homogenisieren und Plastifizieren von Kunststoffen, dem Einarbeiten von Füll- und Verstärkungsstoffen wie auch dem Herstellen von Ausgangsmaterialien für die Lebensmittelindustrie. Die Schneckenwelle bildet hierbei das Arbeitsorgan, welches das zu verarbeitende Material in axialer Richtung vorwärts transportiert (fördert).

Bei der gattungsgemässen Misch- und Knetmaschine führt das Arbeitsorgan nicht nur eine rotative Bewegung aus, sondern bewegt sich gleichzeitig translatorisch. Der Bewegungsablauf zeichnet sich vorzugsweise dadurch aus, dass die Hauptwelle eine der Rotation überlagerte oszillatorische Bewegung in axialer Richtung ausführt. Dieser Bewegungsablauf ermöglicht das gehäuseseitige Einbringen von Einbauten, nämlich der genannten Knetelemente. Knetbolzen sind beispielsweise in entsprechende Aufnahmen eingeschraubte Elemente. Die Knetbolzen können auch hohl ausgeführt sein, damit ein Fluid zugeführt werden kann, um Teil des Gemischs zu werden. Knetzähne haben eine spezielle Form, die mit den Flügelelementen (den Knetflügeln) zusammenwirkt. Wegen des Vorhandenseins der Knetbolzen oder Knetzähne verläuft die auf der Hauptwelle angeordnete Schnecke nicht durchgehend, sondern ist eben in eine Mehrzahl von einzelnen Flügelelementen unterteilt. Die Rotation und die translatorische Bewegung werden so gesteuert, dass die einzelnen Flügelelemente in der Nähe der entsprechenden Knetelemente gelangen, um das zu mischende und knetende Material zu verdichten und eine Scherwirkung auf es auszuüben, um so also den Mischungs- und/oder Knetvorgang zu befördern. Die Misch- und Knetmaschine der oben genannten Gattung sind von der Firma BUSS AG in Pratteln in der Schweiz bekannt und werden auch unter dem Markennamen BUSS Ko-Kneter vertrieben.

Typischerweise umfasst das Knetergehäuse drei oder vier Knetelementreihen. Die einzelnen Knetelemente werden durch eine Bohrung in die sogenannten Verschleissschalen und Gehäuse gesteckt und von aussen mittels einer Gewindemutter gesichert. Dadurch ist ein Wechsel von Knetelementen (etwa nach erfahrenem Verschleiss oder bei einer verfahrenstechnischen Anpassung) einfach möglich. Wenn das Gehäuse dieser Misch- und Knetmaschinen durchgehend mit drei oder vier Knetelementreihen ausgerüstet ist, ist die Anzahl der Flügelelemente festgelegt auf eben drei bzw. vier. Gegebenenfalls lässt beziehungsweise lassen sich beim Austausch der Knetelemente ein oder mehrere Blindbolzen einfügen, wenn weniger geknetet werden soll.

Andere Misch- und Knetmaschinen weisen Knetelemente auf, die mittels eines Presssitzes befestigt werden. Dann können die Knetelemente nur schwer ausgetauscht werden, denn sie müssen zunächst ausgepresst werden und neue Knetelemente müssen eingepresst werden, wozu die einzelnen Gehäuseteile (Schalen) ausgebaut werden müssen.

Bekannt ist es, Kneter, die an sich dreiflüglig sind, abschnittsweise vierflüglig auszugestalten. Da das entsprechende Gehäuse der Misch- und Knetmaschine aber entsprechende drei Bolzenreihen vorsieht, müssen in den vierflügligen Abschnitten die Schalen mit drei Reihen von Knetelementen mit den zugehörigen Knetelementen entfernt werden und durch Schalen mit vier Reihen von Knetelementen ersetzt werden, wobei die Knetelemente in die Schalen eingepresst werden, denn die Teilung von 120° (dreiflüglig) passt nicht zu der Teilung von 90°, wie sie vier Flügel haben.

Insgesamt ist es im Stand der Technik aufwendig, eine Misch- und Knetmaschine umzurüsten, insbesondere was die Anzahl der Reihen von Knetelementen und die entsprechende Flügelelementanzahl an der Schneckenwelle angeht.

Es ist die Aufgabe der vorliegenden Erfindung, eine Misch- und Knetmaschine bereitzustellen, welche leichter umrüstbar ist.

Die Aufgabe wird in einem Aspekt durch eine Misch- und Knetmaschine mit den Merkmalen gemäss Patentanspruch 1 gelöst, in einem anderen Aspekt durch ein Gehäuse für eine Misch- und Knetmaschine mit den Merkmalen gemäss Patentanspruch 11 gelöst, in einem weiteren Aspekt durch eine Gehäusehälfte für ein Gehäuse einer Misch- und Knetmaschine mit den Merkmalen gemäss Patentanspruch 12, eine Schale mit den Merkmalen gemäss Patentanspruch 13 und schliesslich durch eine Schneckenwelle mit den Merkmalen gemäss Patentanspruch 14 (beziehungsweise auch Patentanspruch 17) gelöst.

Die erfindungsgemässe Misch- und Knetmaschine zeichnet sich dadurch aus, dass an dem Gehäuse eine Mehrzahl von Aufnahmen für eine entsprechende Mehrzahl von Reihen von Knetelementen vorgesehen ist, wobei sich die Aufnahmen über den durch den kreisförmigen Raum definierten Kreisbogen hinweg ungleichmässig verteilen.

Anders als beispielsweise im Falle der Misch- und Knetmaschine gemäss der CH 464 656 A, wo sechs Aufnahmen für Knetelemente genau in Winkelabständen von 60° vorgesehen sind, damit dies exakt zu einer drei- oder sechsflügligen Schnecke passt, sieht die Erfindung bewusst eine Abweichung von einer exakten Teilung vor. Dies dient dazu, mehrere Varianten von Besetzungen der Aufnahmen mit Knetelementen alternativ zu verwirklichen: Sind beispielsweise Reihen von Aufnahmen für sechs Reihen von Knetelementen vorgesehen, dann wird durch die Ungleichverteilung bewirkt, dass man alternativ auch eine Besetzung mit nur vier Knetelementen vorsehen kann und zwei der Aufnahmereihen unbesetzt lassen kann. Die entsprechende Besetzung der Schneckenwelle mit Flügelelementen kann dann passend gestaltet werden, es kann also passend zu der ungleichmässigen Verteilung der Aufnahmen über den Kreisbogen hinweg eine ungleichmässige Erstreckung der Flügelelemente über Winkelbereiche vorgesehen werden. Bei einer bevorzugten Ausführungsform der Erfindung ist jede Aufnahme über einen Durchlass, insbesondere für ein Fixierelement, mit einer Aussenwand des Gehäuses verbunden. Es wird somit auf die Technik des Einpressens der Knetelemente verzichtet. So können die Knetelemente schneller ausgetauscht oder durch einen Blindbolzen ersetzt werden.

Bei einer bevorzugten Ausführungsform der vorliegenden Erfindung gibt es im Gehäuse n Reihen von Aufnahmen, wobei n eine natürliche Zahl ≥ 2 ist und wobei die Winkelabstände zwischen zwei benachbarten Aufnahmen von dem Wert von 360°/n um zumindest 1°, bevorzugt mindestens 2,5°, besonders bevorzugt mindestens 5°, ganz besonders bevorzugt um mindestens 10° abweichen. Vorzugsweise beträgt die Zahl n 4 oder 6.

Die n Reihen von Aufnahmeelementen sind vorzugsweise mit höchstens n-1 Reihen von Knetelementen besetzt. Durch das redundante Vorsehen von Aufnahmen kann die Misch- und Knetmaschine flexibel mit Knetelementen besetzt werden.

Bei einer speziellen bevorzugten Ausführungsform sind sechs Reihen von Aufnahmen für Knetelemente vorgesehen, die unter Bildung von drei Paaren am Kreisbogen paarweise einander gegenüberliegen, wobei von den drei Winkelabständen zwischen den drei Paaren zwei Abstände zwischen 40° und 50° liegen und ein Abstand zwischen 80° und 100° liegt. (Die Summe muss 180° betragen. Liegt also der eine Abstand bei 90°+d, dann liegen die beiden anderen Abstände bei 45°-d/2, liegt der Abstand bei 90°-d, liegen die beiden Abstände bei 45°+d/2, wobei d einen Wert zwischen >0° und 10° einnehmen kann.)

Bei einer weiter bevorzugten Ausführungsform der Erfindung sitzen die Flügelelemente auf einem Wellenstab (also der Hauptwelle) der Schneckenwelle mit kreisförmigem Querschnitt, wobei sich zumindest zwei der Flügelelemente in dem Wert des Winkels, über den sie sich erstrecken, voneinander unterscheiden, nämlich insbesondere passend zu der ungleichen Verteilung der Knetelemente und der vorgesehenen translatorischen Bewegung.

Vorzugsweise ist hierbei vorgesehen, dass die Flügelelemente in drei Reihen angeordnet sind, wobei sich in einer Reihe jeweils alle Flügelelemente über den gleichen Winkel erstrecken, wobei die Werte des Winkels über den sich die Flügel erstrecken, bei zweien der drei Reihen zwischen 20° und 120°, vorzugsweise zwischen 110° und 116° beträgt und bei der dritten Reihe passend hierzu zwischen 20° und 170°, im bevorzugten Fall zwischen 128° und 140° beträgt.

Dadurch, dass die Aufnahmen für die Knetelemente flexibel besetzbar sind, kann dies auch innerhalb ein und derselben Misch- und Knetmaschine in verschiedenen Abschnitten derselben erfolgen: So ist gemäss einer ersten Variante vorzugsweise vorgesehen, dass von einer vorbestimmten Anzahl von Reihen von Aufnahmen für Knetelemente in einem ersten Abschnitt des Gehäuses eine erste Anzahl von Reihen von Knetelementen besetzt ist, und in einem zweiten Abschnitt des Gehäuses eine zweite Anzahl von Reihen mit Knetelementen besetzt ist, wobei die zweite Anzahl beispielsweise von der ersten Anzahl verschieden ist, sie kann aber auch mit der ersten Anzahl identisch sein. Der erste Abschnitt des Gehäuses entspricht einem ersten Abschnitt der Schneckenwelle, wo die Anzahl der Flügelelemente eine dritte Anzahl ist, und der zweite Abschnitt des Gehäuses entspricht einem zweiten Abschnitt der Schneckenwelle, wo die Anzahl der Flügelelemente eine vierte Anzahl ist. Auch die vierte Anzahl ist beispielsweise von der dritten Anzahl verschieden, sie kann aber auch mit der dritten Anzahl identisch sein. Gemäss einer zweiten Variante ist alternativ zur ersten Variante vorgesehen oder ergänzend verwirklicht, dass von einer vorbestimmten Anzahl von Reihen von Aufnahmen für Knetelemente in einem ersten Abschnitt des Gehäuses beziehungsweise einem dritten Abschnitt des Gehäuses (Letzteres bei gleichzeitiger Ausführung der ersten Variante) eine erste beziehungsweise dritte Anzahl von Reihen mit Knetelementen besetzt ist (Letzteres insbesondere bei gleichzeitiger Ausführung der ersten Variante) und in einem zweiten beziehungsweise einem vierten Abschnitt des Gehäuses dieselbe erste beziehungsweise dritte Anzahl von Reihen mit Knetelementen besetzt ist wie bei dem ersten beziehungsweise bei dem dritten Abschnitt des Gehäuses, und dass dem ersten beziehungsweise dritten Abschnitt des Gehäuses ein entsprechender erster beziehungsweise dritter Abschnitt der Schneckenwelle zugeordnet ist und dem zweiten beziehungsweise vierten Abschnitt des Gehäuses ein weiterer Abschnitt der Schneckenwelle entspricht und so weiter, wobei die Anzahl der Flügelelemente im ersten beziehungsweise dritten Abschnitt der Schneckenwelle gleich ist wie beim weiteren Abschnitt der Schneckenwelle, wobei aber die Flügelelemente im weiteren Abschnitt gegenüber den Flügelelementen im ersten beziehungsweise dritten Abschnitt der Schneckenwelle um einen Versatzwinkel versetzt sind, sodass die Flügelelemente nicht fluchten. Bei einer Ausführungsform dieser zweiten Variante sind etwa die Flügelelemente in dem ersten beziehungsweise dritten Abschnitt der Schneckenwelle sowie dem weiteren Abschnitt der Schneckenwelle jeweils in sechs Reihen angeordnet und erstrecken sich über einen jeweils gleichen Winkel (Bogenmass), wobei der Erstreckungswinkel für jeden der sechs Flügelelemente unterschiedlich oder gleich sein kann. Wird ein kleinerer Winkel (Bogenmass) gewählt, etwa 15° - 40°, kann die Anordnung der sechs Reihen von Flügelelementen auch unsymmetrisch (60° ± 30°) am Umfang erfolgen. Sowohl bei der ersten als auch der zweiten Variante lässt sich über die Förderstrecke für das Material in der Misch- und Knetmaschine abschnittsweise eine individuell an die Art des Materials und den gewünschten Prozess angepasste Lösung für die Ausgestaltung der Misch- und Knetmaschine finden.

Das Gehäuse für eine Misch- und Knetmaschine gemäss der Erfindung umfasst zumindest zwei Gehäuseteile, welche zum Öffnen des Gehäuses wegklappbar oder voneinander trennbar sind, wobei das Gehäuse einen im Querschnitt kreisförmigen Innenraum bereitstellt, wobei gemäss der Erfindung an dem Gehäuse eine Mehrzahl von Aufnahmen für eine entsprechende Mehrzahl von Reihen von Knetelementen vorgesehen ist und wobei sich die Aufnahmen über den durch den kreisförmigen Innenraum definierten Kreisbogen hinweg ungleichmässig verteilen. Dieses Gehäuse dient somit zum Einsatz in der erfindungsgemässen Misch- und Knetmaschine. Die Aufnahmen können hierbei in einer Innenschale des Gehäuses vorgesehen sein, die von dem restlichen Gehäuse abtrennbar ist. Vorzugsweise ist aber vorgesehen, dass jede Aufnahme über einen Durchlass, insbesondere für ein Fixierelement mit einer Aussenwand des Gehäuses verbunden ist, sodass eben durch den Durchlass ein Fixierelement für ein entsprechendes Knetelement steckbar ist. Gegebenenfalls kann durch einen in den Durchlass eingesteckten Hohlbolzen auch ein Fluid zugeführt werden. Ein Bolzen im Durchlass kann ferner mit einem Temperaturfühler oder Druckfühler versehen sein.

Die erfindungsgemässe Gehäusehälfte für ein Gehäuse einer Misch- und Knetmaschine umfasst eine Innenwand (z. B. an einer in den Hauptkörper der Gehäusehälfte eingesetzten Schale), die im Querschnitt die Form eines Kreissegments aufweist, wobei an der Innenwand zumindest zwei Reihen von Aufnahmen für Knetelemente angeordnet sind, und wobei ein Winkelabstand zweier benachbarter Reihen von dem Wert 360°/n, wobei n eine natürliche Zahl ≥ 2 ist, um zumindest 1°, bevorzugt mindestens 2°, besonders bevorzugt mindestens 5°, und ganz besonders bevorzugt mindestens 10° abweicht.

Die erfindungsgemässe Schale für eine Gehäusehälfte eines Gehäuses einer Misch- und Knetmaschine weist im Querschnitt die Form eines Kreissegments auf und umfasst zumindest zwei Reihen von Aufnahmen für Knetelemente. Solche Schalen sind zur Bereitstellung der Innenwand insbesondere in einer Gehäusehälfte einsetzbar. Ein Winkelabstand zweier benachbarter Reihen weicht von dem Wert 360°/n, wobei n eine natürliche Zahl ≥ 2 ist, um zumindest 1°, bevorzugt 2,5°, besonders bevorzugt mindestens 5° und ganz besonders bevorzugt um mindestens 10° ab.

Die erfindungsgemässe Schneckenwelle für eine Misch- und Knetmaschine umfasst einen Wellenstab mit kreisförmigem Querschnitt (die Hauptwelle) und eine Mehrzahl von Flügelelementen, die auf dem Wellenstab aufsitzen, wobei sich zumindest zwei der Flügelelemente in dem Wert des Winkels, über den sie sich erstrecken, voneinander unterscheiden. Auch diese Schneckenwelle ist bei der erfindungsgemässen Misch- und Knetmaschine einsetzbar. Die oben beschriebenen bevorzugten Ausführungsformen der Ausgestaltung der Schneckenwelle betreffen auch die Schneckenwelle als solche: Bei drei Reihen von Flügelelementen beträgt die Winkelerstreckung zweier der Flügelelemente zwischen 110° und 116° und bei dem dritten Flügelelement zwischen 128° und 140°. Ferner kann vorgesehen sein, dass in einem Abschnitt der Schneckenwelle die Anzahl der Reihen von Flügelelementen der Anzahl der Reihen von Flügelelementen in einem weiteren Abschnitt der Schneckenwelle gleich. Auch hier können bei jeweils sechs Reihen von Flügelelementen im ersten beziehungsweise dritten Abschnitt sowie im weiteren Abschnitt diese sich über einen jeweils gleichen Winkel von zwischen 15° und 75° erstrecken, wobei der Versatzwinkel zwischen 10° und 20°, vorzugsweise 15° beträgt.

Nachfolgend wird die Erfindung unter Bezug auf die Zeichnung näher beschrieben, in der:
- Fig. 1: einen Schnitt durch die erfindungsgemässe Misch- und Knetmaschine bei der Besetzung mit sechs Knetbolzen zeigt;
- Fig. 2: einen der Fig. 1 entsprechenden Schnitt bei der Besetzung mit vier Knetbolzen zeigt;
- Fig. 3: einen der Fig. 1 entsprechenden Schnitt bei der Besetzung mit drei Knetbolzen zeigt; und
- Fig. 4: einen der Fig. 1 entsprechenden Schnitt bei der Besetzung mit zwei Knetbolzen zeigt;
- Fig. 5a: die Winkelteilung bei einer zweiflügligen Schneckenwelle zeigt; und
- Fig. 5b: hierzu die Lage der Knetbolzen bei der sechsreihigen Anordnung aus Fig. 1 veranschaulicht;
- Fig. 6a: die Winkelteilung bei einer dreiflügligen Schneckenwelle zeigt; und
- Fig. 6b: hierzu die Lage der Knetbolzen bei der dreireihigen Anordnung aus Fig. 3 veranschaulicht;
- Fig. 7a: die Winkelteilung bei einer sechsflügligen Schneckenwelle zeigt; und
- Fig. 7b: hierzu die Lage der Knetbolzen bei der zweireihigen Anordnung aus Fig. 4 veranschaulicht;
- Fig. 8: die Lage der Flügelelemente bei einer Schneckenwelle zeigt, bei der eine vierflüglige Schneckenwelle einen dreiflügligen Abschnitt aufweist, und dazugehörig die Lage der entsprechenden Knetbolzen;
- Fig. 9: die Lage der Flügelelemente bei einer Schneckenwelle zeigt, bei der eine zweiflüglige Schneckenwelle einen dreiflügligen Abschnitt aufweist, und dazugehörig die Lage der entsprechenden Knetbolzen;
- Fig. 10: die Lage der Flügelelemente bei einer Schneckenwelle zeigt, bei der eine sechsflüglige Schneckenwelle einen dreiflügligen Abschnitt aufweist, und dazugehörig die Lage der entsprechenden Knetbolzen;
- Fig. 11a- d: in Abwandlung der Ausführungsform gemäss Fig. 5a und Fig. 5b eine zweiflüglige Schneckenwelle mit zwei, drei, vier beziehungsweise sechs Reihen von Knetbolzen zeigt;
- Fig. 11e: hierzu die Winkelteilung zeigt;
- Fig, 12: in Abwandlung der Ausführungsform gemäss Fig. 6a und Fig. 6b eine dreiflüglige Schneckenwelle mit unterschiedlich grossen Flügelelementen zeigt; und
- Fig. 12b: hierzu die Winkelteilung zeigt.

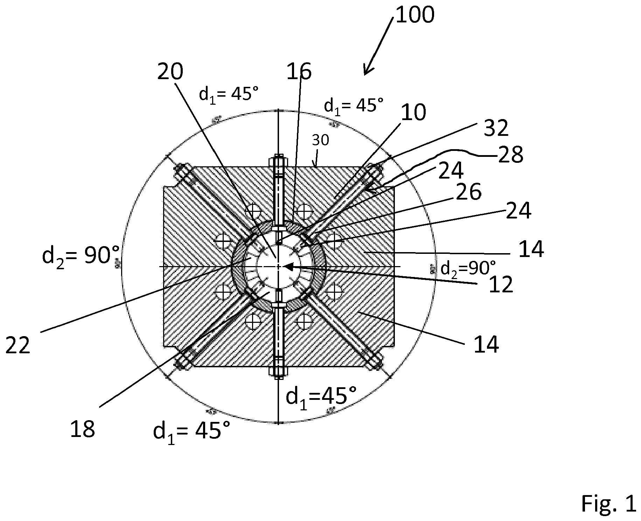

Eine im Schnitt in Fig. 1 gezeigte und im Ganzen mit 100 bezeichnete Misch- und Knetmaschine umfasst ein Gehäuse 10 und in dem Gehäuse eine Schneckenwelle 12. Das Gehäuse 10 umfasst zwei Gehäusehälften 14, die innen mit einer sogenannten Gehäuseschale 16 ausgekleidet sind, wobei die Gehäuseschalen 16 insgesamt einen Innenraum 18 mit kreisförmigem Querschnitt begrenzen.

Die Werkstoffe dieser Gehäuse- oder Halbschalen 16 werden entsprechend den Extrudateigenschaften gewählt (z. B. Korrosion, Abrasion, Kombination aus beidem, tribologische Eigenschaften, usw.). Üblich sind Gehäuseschalen 16 mit Spalt, der fertigungsbedingt durch die Teilung eines vorgefertigten Hohlzylinders, z. B. durch Drahterodieren, entsteht. Bekannt sind Halbschalen ohne Spalt für Extrudate, die auf Grund der Anforderungen an das Extrudat oder Extrudateigenschaften einen Spalt nicht zulassen (z. B. Lebensmittel, thermische Sensitivität oder dergleichen).

Die Schneckenwelle 12 umfasst einen Wellenstab 20 und Flügelelemente 22. In den beiden Gehäusehälften 14 sind Aufnahmen für Knetbolzen und Knetzähne 24 vorgesehen.

Die einzelnen Knetbolzen sind von einem Fixierelement 26 gehalten, das einen entsprechenden Durchlass 28 in dem Gehäuse durchdringt und mit einem Aussengewindeabschnitt über die Aussenwand 30 des Gehäuses hinaus steht, wo eine Mutter 32 aufschraubbar ist, um das Fixierelement 26 in dem Gehäuse zu fixieren und damit auch den Knetbolzen 24 zu fixieren. (Alternativ weist das Knetelement ein Innengewinde für eine Schraube auf und anstelle des Fixierelements 26 und der Mutter 32 wird eine Schraube zur Fixierung des Knetbolzens verwendet.) Das Gehäuse 10 ist vorzugsweise mittels eines oder mehrerer Thermogeräte temperierbar oder mit elektrischen Heizpatronen oder aussen am Gehäuse angebrachten Heizplatten beheizbar und ist wasser- oder luftgekühlt, gegebenfalls auch durch ein anderes Fluid gekühlt, etwa durch ein Öl oder eine sonstige Flüssigkeit oder ein spezielles Gas.

Anhand der Darstellung des die Misch- und Knetmaschine umgebenden Kreises ist ersichtlich, dass jeweils zwei Aufnahmen den Abstand d₁=45° zueinander haben, während die äusseren Aufnahmen benachbarter Gehäuse den Winkelabstand von d₂ = 90° zueinander aufweisen.

Anders, als bisher üblich, ist bei einer Anordnung mit sechs Aufnahmen also keine gleichmässige Verteilung über den Winkelbereich des Innenkreises, also in Teile von 60°, gegeben, sondern es ist eine Ungleichverteilung vorgesehen.

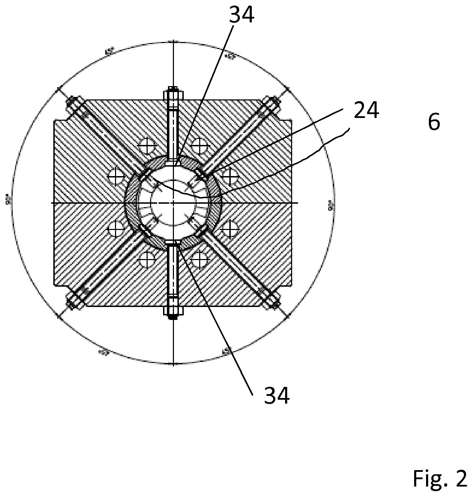

Die ungleichmässige Winkelaufteilung hat den Vorteil, dass andere Besetzungen der Aufnahmen in dem Gehäuse 10 möglich sind:
So veranschaulicht Fig. 2 die Besetzung mit vier Knetbolzen 24, wobei in zwei der Aufnahmen ein Blindbolzen 34 eingebracht ist. Der Blindbolzen 34 ist dort vorgesehen, wo der Abstand zu der nächsten Aufnahme nur 45° beträgt (zu beiden Seiten hin). Dadurch haben die vier Knetbolzen 24 bei der Ausführungsform gemäss Fig. 2 einen Winkelabstand von exakt 90°, wie man dies von herkömmlichen Misch- und Knetmaschinen kennt.

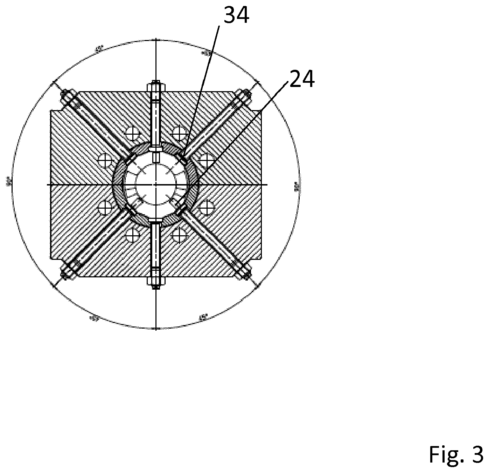

Bei der Ausführungsform gemäss Fig. 3 sind drei Knetbolzen 24 vorgesehen und drei Blindbolzen 34. In diesem Falle sind die Knetbolzen 24 ungleich verteilt, da zwei Knetbolzen einen Abstand von 90° zueinander aufweisen, und beide diese Knetbolzen zu dem dritten Knetbolzen einen Abstand von 135° aufweisen.

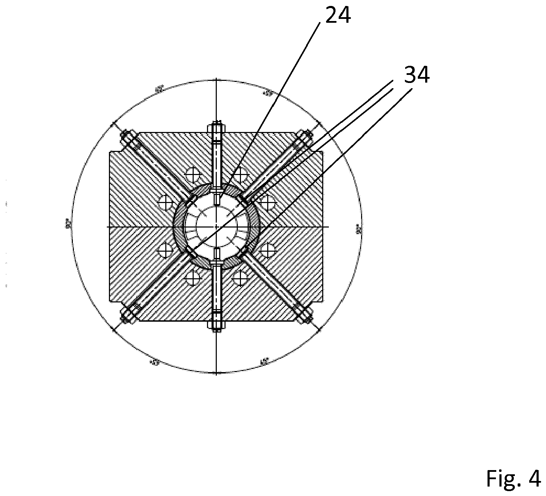

In Fig. 4 ist veranschaulicht, dass nur zwei Knetbolzen 24 und vier Blindbolzen 34 vorgesehen sind. Die beiden Knetbolzen 24 liegen einander exakt gegenüber. Auch diese Knetbolzenanordnung entspricht die einer herkömmlichen Misch- und Knetmaschine.

Anhand der Figuren 1 bis 4 wurde erläutert, wie durch die Ungleichverteilung der sechs Aufnahmen Anordnungen mit sechs, vier, drei und zwei Knetbolzen verwirklichbar sind. Insbesondere können die beiden Gehäusehälften 14 voneinander weggeklappt werden. Ein entsprechender Knetbolzen kann zusammen mit dem entsprechenden Fixierelement 26 von innen eingesteckt werden, woraufhin dann von aussen die Muttern 32 aufgeschraubt werden können. Genau so schnell kann ein Knetbolzen wieder herausgenommen werden und durch einen Blindbolzen ersetzt werden. Ein Blindbolzen ist ebenso schnell wieder herausgenommen, um nochmals einen Knetbolzen einzusetzen.

Es versteht sich, dass die Schneckenwelle in geeigneter Form passend zur Anordnung der Knetbolzen vorgesehen sein muss. Hierbei kann eine flexibel mit Flügelelementen bestückbare Schneckenwelle vorgesehen werden, sodass bei einem Wechsel der Knetbolzenanordnung auch die Flügelanordnung gewechselt wird. Gegebenenfalls kann auch die komplette Schneckenwelle ausgetauscht werden.

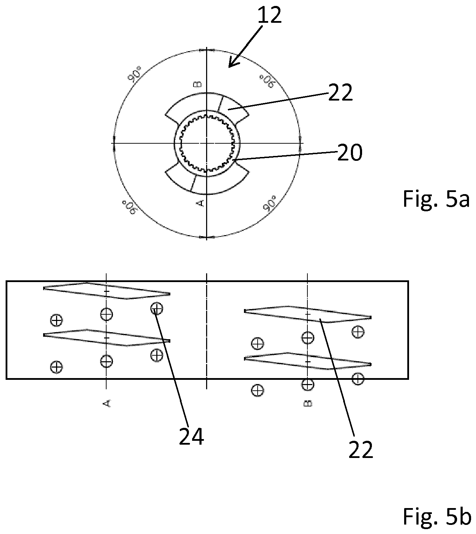

Fig. 5a zeigt im Schnitt die Schneckenwelle mit den Flügelelementen 22 auf dem Wellenstab 20. Die in Fig. 5a gezeigte zweiflüglige Schneckenwelle (zwei Flügel pro Umdrehung) ist mit einer sechsreihigen Bolzenanordnung wie in Fig. 1 gezeigt umsetzbar. Die Bolzen sind in Fig. 5b veranschaulicht, wobei Fig. 5b veranschaulicht, wie ein ausgerollter Aussenmantel der Schneckenwelle 18 aussehen würde, und hierbei relativ zu dem Flügelelement 22 die Lage der Bolzen veranschaulicht. Die Flügelelemente 22 bei der zweiflügligen Anordnung erstrecken sich im Beispielsfall der Fig. 5a über einen Winkel von ziemlich genau 90°. Diese Schneckenwelle 12 in Kombination mit den sechs Bolzenreihen ermöglicht eine erhöhte Scherung des Extrudats, da gegenüber dem bekannten drei bzw. vierflügeligen Schneckenwellen zwei bzw. drei zusätzliche Scherspalte vorhanden sind. Da die Flügelfläche, die beim Vorwärtshub des Extrudats in axialer Richtung in Richtung Gehäuseende schiebt, zusätzlich zur Förderung des Extrudats durch die Rotationsbewegung der Schneckenwelle auf Grund der Steigung der Flügel, kleiner ist als bei den Drei- bzw. Vierflügelelementen, ergibt sich eine verlängterte Verweilzeit des Extrudats im Zweiflügelelement. Gleichzeitig sind die Lücken zwischen den beiden Flügeln grösser als bei den Drei- bzw. Vierflügelelementen, dies erlaubt dem Extrudat leichter entgegen der Förderrichtung zurückzuströmen. Dadurch werden die Verweilzeit und die Axialvermischung weiter erhöht, und es kann noch mehr Scherung auf das Extrudat ausgeübt werden. Bei sechs Bolzen bilden je drei Bolzen in Kombination mit zwei axial hintereinanderliegenden Flügeln des Zweiflügelelements einen Scherspalt und die beiden anderen Bolzen eine Art Barriere, die verhindert, dass ein grösserer Teilstrom um den Scherspalt herumfliesst, ohne dass dieser Teilstrom zumindest etwas Scherung erfährt und gleichzeitig durch das Umfliessen dieser "Barrieren" eine Dehnströmung erfährt, die sich vorteilhaft auf das distributive Mischen des Extrudats auswirkt.

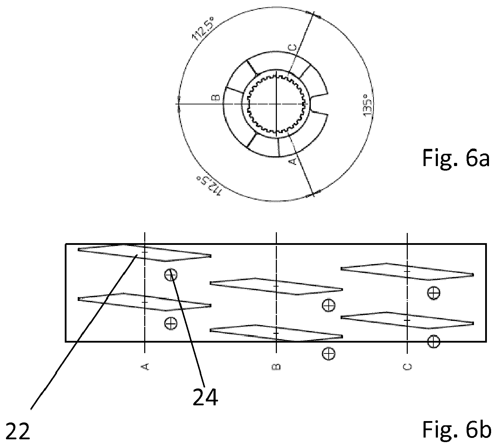

Fig. 6a zeigt eine dreiflüglige Anordnung, wie sie in Verbindung mit den drei Bolzenreihen aus Fig. 3 umsetzbar ist. Fig. 6b zeigt die entsprechende ausgerollte Darstellung. Bei der dreiflügligen Anordnung gemäss Fig. 6a ist vorgesehen, dass sich der eine Schneckenwellenflügel über einen Winkel (ein Bogenmass) von 135° erstreckt, die anderen beiden hingegen über einen Winkel (ein Bogenmass) von 112,5°. Hier wird der Tatsache Rechnung getragen, dass, wie oben anhand der Fig. 3 erläutert, zwei der Bolzenabstände 135° betragen und der dritte 90° beträgt. Diese Ausführungsform ist nicht auf die exakten Werte von 135° bzw. 112,5° festgelegt, sondern es sind Variationen möglich, die ebenfalls zu der Ausführungsform des Gehäuses passen, das in Fig. 1 dargestellt ist. Umgekehrt kann auch die Schneckenwelle gemäss Fig. 6a und 6b bei anderen Anordnungen als in der in Fig. 1 gezeigten angesetzt werden. Durch die asymmetrische Anordnung der Flügel des Dreiflügelelements mit der besagten Winkelteilung und der Anordnung auf der Schneckenwelle 12 mit einer Lücke exakt nach unten, wird der gleichmässige Fluss des Extrudats in das angrenzende Zweiflügelelement gewährleistet und jegliche Toträume sind beseitigt. Durch die asymmetrische Teilung und die zugehörige asymmetrische Bolzenanordnung steht eine entsprechende freie Fläche zur Verfügung, die eine Gestaltung der Flügelflächen zulässt, die beim bekannten symmetrischen Dreiflügelelement nicht möglich sind.

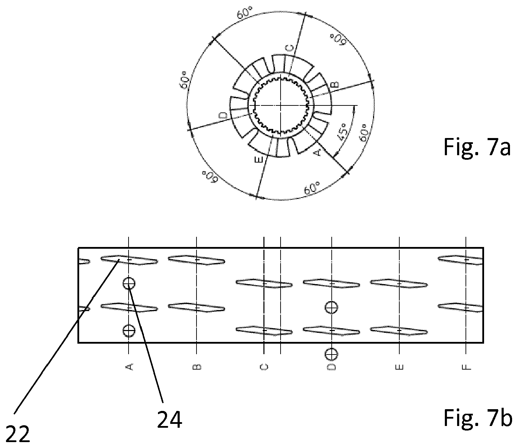

Die Fig. 7a und 7b veranschaulichen nun eine sechsflüglige Anordnung, wie sie zu einer zweireihigen Bolzenanordnung gemäss Fig. 4 passt. Jedes einzelne der sechs Flügelelemente 22 weist hier eine Erstreckung (ein Bogenmass) von 45° auf, sodass die Abstände zwischen den Flügelelementen 15° betragen. (Bei einer im allgemeinen Fall zwischen 15° und 75° liegenden Erstreckung ε beträgt der Winkelabstand 60° - ε.) In Abwandlung von einer Gleichverteilung kann vorgesehen sein (nicht gezeigt), dass eine der Flügelelemente um 60° ± 30° versetzt ist, sodass er näher an dem einen Nachbarn als an dem anderen Nachbarn ist, Vorraussetzung hierfür ist eine beliebige Erstreckung ε Don 15° - 40°. Diese sechsflüglige Schneckenwelle erzeugt wenig Scherung und damit Temperaturerhöhung, da nur zwei Bolzenbahnen bestückt sind, aber auf Grund der hohen Anzahl von Flügeln ist die distributive Mischwirkung sehr hoch, da das Extrudat entsprechend oft aufgeteilt und neu orientiert wird. Die Abreinigung und die Scherspalte lassen sich aber nur mit der erfindungsgemässen Bolzenanordnung im Knetergehäuse realisieren, die es ermöglicht, zwei um 180° versetzt angeordnete Bolzenreihen so anzuordnen, dass die gewünschte Scherspalten entstehen und die Abreinigung erfolgt.

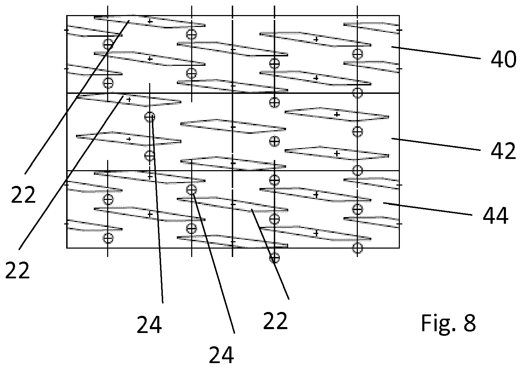

Bei der hier vorgestellten flexiblen Bolzenanordnung ist es auch möglich, unterschiedliche Schneckenabschnitte (die in der Erstreckungsrichtung der Misch- und Knetmaschine also in Axialrichtung der Schneckenwelle 12 aufeinander folgen) unterschiedlich zu besetzen, wobei das Gehäuse passend mit Bolzen bestückt wird: So veranschaulicht die Fig. 8 den Übergang von einem vierflügligen Abschnitt 40 und zugehörigen vier Bolzenreihen zu einem dreiflügligen Abschnitt 32 und zugehörigen drei Bolzenreihen und einem weiteren vierflügligen Abschnitt 44 mit wieder vier Bolzenreihen.

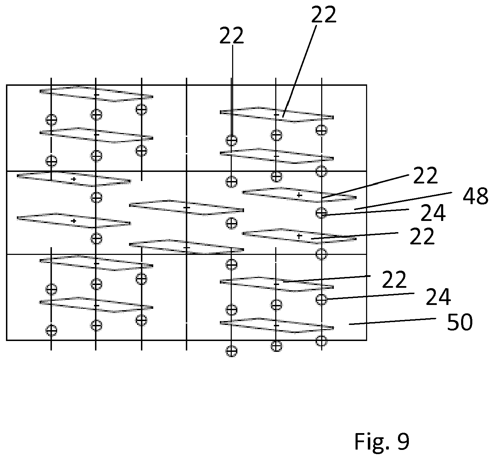

Die Fig. 9 veranschaulicht einen zweiflügligen Abschnitt 46 mit sechs Bolzenreihen, der in einen dreiflügligen Abschnitt 48 mit drei Bolzenreihen übergeht, worauf wiederum ein zweiflügliger Abschnitt 50 mit sechs Bolzenreihen folgt.

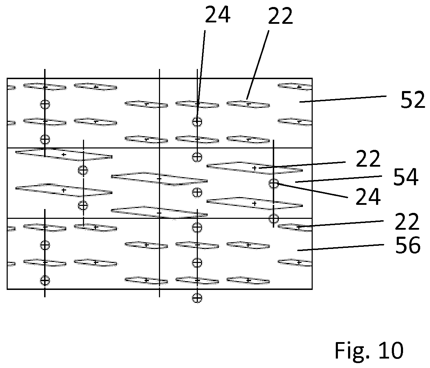

Die Fig. 10 veranschaulicht den Übergang von einem sechsflügligen Abschnitt 52 mit zwei Bolzenreihen zu einem dreiflügligen Abschnitt 54 mit drei Bolzenreihen und nochmals zu einem sechsflügligen Abschnitt 56 mit zwei Bolzenreihen.

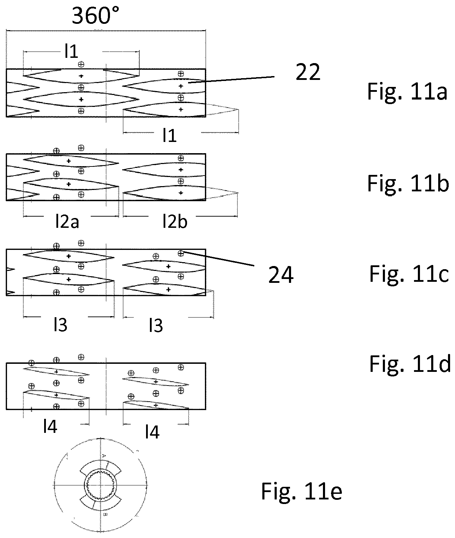

Die Figuren 11a bis d zeigen für eine zweiflüglige Ausführungsform einer Schneckenwelle den Fall von zwei, drei, vier und sechs Bolzenreihen 24. Die Erstreckung (das Bogenmass) der Flügelelemente 22 beträgt im Falle der Fig. 11a gleich l₁ zwischen 20° und 210°. Im Falle der Fig. 11b beträgt l₂ₐ zwischen 20° und 175°, l_{2b} zwischen 20° und 210°. Im Falle der Fig. 11c beträgt l₃ zwischen 20° und 165°. Im Falle der Fig. 11d beträgt l₄ zwischen 20° und 120°.

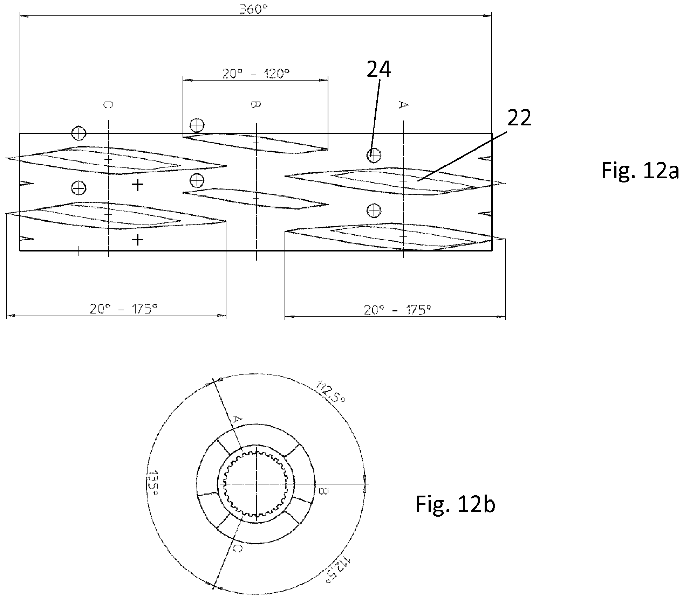

Die Fig. 12a zeigt ein Beispiel einer Schneckenwelle mit unterschiedlichen Flügelelementen, von denen die einen eine Erstreckung (Bogenmass) von zwischen 20° und 120° haben, die anderen von zwischen 20° und 175°.

Insgesamt ist durch die Erfindung für eine hohe Flexibilität in der Besetzung des Gehäuses mit Knetbolzen oder Knetzähnen oder sonstigen Knetelementen gesorgt, wie anhand eines Vergleichs der vorliegenden Fig. 1 bis 4 ersichtlich, wozu passend die Schneckenwelle mit geeigneten Flügelelementen ausgestattet ist.

## Patentansprüche

1. Misch- und Knetmaschine (100), aufweisend:
- ein Gehäuse (10), das aus mindestens zwei Gehäuseteilen (14) zusammengesetzt ist, welche zum Öffnen des Gehäuses voneinander wegklappbar oder voneinander trennbar sind, und welches einen im Querschnitt kreisförmigen Innenraum (18) bereitstellt,
- eine Schneckenwelle (12), die im Betrieb in dem Innenraum (18) rotiert und sich gleichzeitig in einer axialen Richtung der Schneckenwelle (20) translatorisch hin- und her bewegt,
- eine Mehrzahl von der Innenseite zumindest eines der Gehäuse nach innen ragenden Knetelementen (24), die in zumindest zwei Reihen angeordnet sind, wobei die Schneckenwelle (12) Flügelelemente (22) aufweist, die durch die Rotation und die translatorische Bewegung der Schneckenwelle ein zu mischendes und zu knetendes Material in einen Spalt zwischen dem jeweiligen Flügelelement (22) und einem Knetelement (24) hineinziehen, wobei durch eine hierbei entstehende Scherung eine Misch- und Knetwirkung erzielt wird,
**dadurch gekennzeichnet, dass** in dem Gehäuse (10) eine Mehrzahl von Aufnahmen für eine entsprechende Mehrzahl von Reihen von Knetelementen (24) vorgesehen ist, wobei sich die Aufnahme über den durch den kreisförmigen Innenraum (18) definierten Kreisbogen hinweg ungleichmässig verteilen.

2. Misch- und Knetmaschine (100) nach Anspruch 1, **dadurch gekennzeichnet, dass** jede Aufnahme über einen Durchlass (28), insbesondere für ein Fixierelement (26), mit einer Aussenwand (30) des Gehäuses (10) verbunden ist.

3. Misch- und Knetmaschine (100) nach Anspruch 1 oder 2, bei der es im Gehäuse (10) n Reihen von Aufnahmen gibt, wobei n eine natürliche Zahl ≥ 2 ist, und wobei die Winkelabstände (d₁, d₂) zwischen zwei benachbarten Aufnahmen gegenüber dem Wert von 360°/n und zumindest 1°, bevorzugt zumindest 2,5°, besonders bevorzugt mindestens 5°, ganz besonders bevorzugt um mindestens 10° abweichen.

4. Misch- und Knetmaschine (100) nach einem der vorhergehenden Ansprüche, bei dem zumindest in einem Abschnitt der Misch- und Knetmaschine (100) n Reihen von Aufnahmen für Knetelemente (24) vorgesehen sind, wobei höchstens n-1 Reihen von Aufnahmen von Knetelementen (24) besetzt sind.

5. Misch- und Knetmaschine (100) nach einem der vorhergehenden Ansprüche, bei der zumindest in einem Abschnitt der Misch- und Knetmaschine (100) sechs Reihen von Aufnahmen für Knetelemente (24) vorgesehen sind, die unter Bildung von drei Paaren paarweise am Kreisbogen einander gegenüberliegen, wobei von den Winkelabständen zwischen den drei Paaren zwei Abstände zwischen 40° und 50° liegen und ein Abstand zwischen 80° und 100° beträgt.

6. Misch- und Knetmaschine (100) nach einem der vorhergehenden Ansprüche, bei dem die Flügelelemente (22) auf einem Wellenstab (20) mit kreisförmigem Querschnitt aufsitzen, und bei dem sich zumindest zwei der Flügelelemente (22) in dem Wert des Winkels, über den sie sich erstrecken, voneinander unterscheiden.

7. Misch- und Knetmaschine (100) nach Anspruch 6, bei dem zumindest in einem Abschnitt der Misch- und Knetmaschine (100) die Flügelelemente (22) in drei Reihen angeordnet sind, wobei sich in einer Reihe jeweils alle Flügelelemente (22) über den gleichen Winkel erstrecken, wobei die Werte des Winkels, über den sich die drei Flügelelemente (22) erstrecken, bei zweien der drei Reihen zwischen 20° und 175° beträgt, bei der dritten Reihe 20° und 120° beträgt.

8. Misch- und Knetmaschine (100) nach einem der vorhergehenden Ansprüche, bei der von einer vorbestimmten Anzahl von Reihen von Aufnahmen für Knetelemente (24) in einem ersten Abschnitt des Gehäuses (10) eine erste Anzahl von Reihen mit Knetelementen (24) besetzt ist und in einem zweiten Abschnitt des Gehäuses (10) eine zweite Anzahl von Reihen mit Knetelementen (24) besetzt ist, wobei die zweite Anzahl von der ersten Anzahl verschieden ist, und dass dem ersten Abschnitt des Gehäuses (10) ein entsprechender erster Abschnitt der Schneckenwelle (12) zugeordnet ist, wo die Anzahl der Flügelelemente (22) eine dritte Anzahl ist und der zweite Abschnitt des Gehäuses (10) einem zweiten Abschnitt der Schneckenwelle (12) entspricht, wo die Anzahl der Flügelelemente (22) eine vierte Anzahl ist, wobei die vierte Anzahl von der dritten Anzahl verschieden ist.

9. Misch- und Knetmaschine (100) nach einem der vorhergehenden Ansprüche, bei der von einer vorbestimmten Anzahl von Reihen von Aufnahmen für Knetelemente (24) in einem ersten beziehungsweise einem dritten Abschnitt des Gehäuses (10) eine erste beziehungsweise dritte Anzahl von Reihen mit Knetelementen (24) besetzt ist und in einem zweiten beziehungsweise einem vierten Abschnitt des Gehäuses (10) dieselbe erste beziehungsweise dritte Anzahl von Reihen mit Knetelementen (24) besetzt ist wie bei dem ersten beziehungsweise bei dem dritten Abschnitt des Gehäuses (10), und dass dem ersten beziehungsweise dritten Abschnitt des Gehäuses (10) ein entsprechender erster beziehungsweise dritter Abschnitt der Schneckenwelle (12) zugeordnet ist und dem zweiten beziehungsweise vierten Abschnitt des Gehäuses (10) ein weiterer Abschnitt der Schneckenwelle (12) entspricht, wobei die Anzahl der Flügelelemente (22) im ersten beziehungsweise dritten Abschnitt der Schneckenwelle (12) gleich ist wie beim weiteren Abschnitt der Schneckenwelle (12).

10. Misch- und Knetmaschine (100) nach Anspruch 9, bei dem die Flügelelemente in dem ersten beziehungsweise dritten Abschnitt der Schneckenwelle (12) sowie dem weiteren Abschnitt der Schneckenwelle (12) jeweils in sechs Reihen angeordnet sind und sich über einen jeweils gleichen Winkel von zwischen 15 und 75 ° erstrecken, und wobei der Versatzwinkel zwischen 10° und 20°, vorzugsweise 15 ° beträgt.

11. Gehäuse (10) für eine Misch- und Knetmaschine (100), das zumindest zwei Gehäuseteile (14) umfasst, welche zum Öffnen des Gehäuses wegklappbar oder voneinander trennbar sind, und welches einen im Querschnitt kreisförmigen Innenraum (18) bereitstellt, **dadurch gekennzeichnet, dass** an dem Gehäuse (10) eine Mehrzahl von Aufnahmen für eine entsprechende Mehrzahl von Reihen für Knetelemente (24) vorgesehen ist, wobei sich die Aufnahmen über den durch den kreisförmigen Innenraum (18) definierten Kreisbogen hinweg ungleichmässig verteilen.

12. Gehäusehälfte (14) für ein Gehäuse (10) einer Misch- und Knetmaschine (100) mit einer Innenwand, die im Querschnitt die Form eines Kreissegments aufweist, wobei an der Innenwand zumindest zwei Reihen von Aufnahmen für Knetelemente (24) angeordnet sind, **dadurch gekennzeichnet, dass** ein Winkelabstand zweier benachbarter Reihen von dem Wert 360°/n, wobei n eine natürliche Zahl ≥ 2 ist, um zumindest 1°, bevorzugt 2,5°, besonders bevorzugt mindestens 5° und ganz besonders bevorzugt um mindestens 10° abweicht.

13. Schale für eine Gehäusehälfte (14) eines Gehäuses (10) einer Misch- und Knetmaschine (100), wobei die Schale im Querschnitt die Form eines Kreissegments aufweist und zumindest zwei Reihen von Aufnahmen für Knetelemente (24) umfasst, **dadurch gekennzeichnet, dass** ein Winkelabstand zweier benachbarter Reihen von dem Wert 360°/n, wobei n eine natürliche Zahl ≥ 2 ist, um zumindest 1°, bevorzugt 2,5°, besonders bevorzugt mindestens 5° und ganz besonders bevorzugt um mindestens 10° abweicht.

14. Schneckenwelle (12) für eine Misch- und Knetmaschine (100) mit einem Wellenstab (20) mit kreisförmigem Querschnitt und einer Mehrzahl von Flügelelementen (22), die auf dem Wellenstab (20) aufsitzen, **dadurch gekennzeichnet, dass** sich zumindest zwei der Flügelelemente in dem Wert des Winkels, über den sie sich erstrecken, voneinander unterscheiden.

15. Schneckenwelle (12) nach Anspruch 14, bei der die Flügelelemente (22) zumindest in einem Abschnitt der Misch- und Knetmaschine (100) in drei Reihen angeordnet sind, wobei sich in einer Reihe jeweils alle Flügelelemente (22) über den gleichen Winkel erstrecken, wobei die Werte des Winkels, über den sich die drei Flügelelemente (22) erstrecken, bei zweien der drei Reihen zwischen 110° und 116° beträgt und bei der dritten Reihe 128° und 140° beträgt.

16. Schneckenwelle (12) nach Anspruch 14 oder 15, bei der in einem ersten Abschnitt der Schneckenwelle (12) die Anzahl der Flügelelemente (22) sich von der Anzahl der Flügelelemente (22) in einem zweiten Abschnitt der Schneckenwelle (12) unterscheidet.

17. Schneckenwelle (12) für eine Misch- und Knetmaschine (100), insbesondere nach einem der Ansprüche 14 bis 16, mit einem Wellenstab (20) mit kreisförmigem Querschnitt und einer Mehrzahl von Flügelelementen (22), die auf dem Wellenstab (20) aufsitzen, **dadurch gekennzeichnet, dass** in einem ersten oder einem dritten Abschnitt der Schneckenwelle (12) die Anzahl der Reihen von Flügelelementen der Anzahl von Reihen der Flügelelemente (22) in einem weiteren Abschnitt der Schneckenwelle (12) gleich ist, wobei aber die Flügelelemente (22) im weiteren Abschnitt gegenüber den Flügelelementen (22) im ersten beziehungsweise dritten Abschnitt der Schneckenwelle (12) um einen Versatzwinkel versetzt sind, sodass die Flügelelemente (22) nicht fluchten.

18. Schneckenwelle (12) nach Anspruch 17, bei der die Flügelelemente (22) in ihrem ersten beziehungsweise dritten Abschnitt sowie ihrem weiteren Abschnitt jeweils in sechs Reihen angeordnet sind und sich über einen jeweils gleichen Winkel von zwischen 15° und 75° erstrecken, und wobei der Versatzwinkel zwischen 10° und 20°, vorzugsweise 15° beträgt.
